# EUROPÄISCHE PATENTANMELDUNG

(11) **EP 2 479 472 A2**
(43) Veröffentlichungstag der Anmeldung: **25.07.2012**
(21) Anmeldenummer: 12151230.5
(22) Anmeldetag: 16.01.2012
(51) Int. Cl.: F16P 3/14

(54) **Werkstückbearbeitungsmaschine und Verfahren zum Betreiben einer solchen**

(30) Priorität: 24.01.2011 DE 102011009299
(71) Anmelder: Esab Cutting Systems GmbH, 61184 Karben (DE)
(72) Erfinder: Vogt, Dr. Reinhard, 64285 Darmstadt (DE)
(74) Vertreter: KEIL & SCHAAFHAUSEN Patentanwälte

(57) **Zusammenfassung**

Die Erfindung betrifft ein Verfahren zum Betreiben einer Werkstückbearbeitungsmaschine, insbesondere einer Schneidmaschine, Stanzmaschine oder dergl., mit einem in einem Gefahrenbereich der Maschine arbeitenden Sensor (5), insbesondere einer Lichtschrankenanordnung, und einer Steuereinrichtung (1), wobei die Steuereinrichtung mit dem Sensor (5) derart zusammenwirkt, dass in einem aktiven Zustand des Sensors (5) das Eindringen eines Objektes in den Gefahrenbereich von dem Sensor erfasst und ein entsprechendes Objekterkennungssignal von dem Sensor an die Steuereinrichtung (1) übermittelt wird, wobei die Steuereinrichtung (1) nach Eingang des Objekterkennungssignals eine Sicherheitsmaßnahme auslöst. Um auf einfache Weise bei Störungen, wie Funkenflug oder Schlackespritzern, die Sicherheitsmaßnahme nicht unnötig auszulösen und gleichzeitig die Sicherheit des Bedienungspersonals zu gewährleisten, wird der Sensor (5) vor Beginn eines vorbestimmten Prozessschrittes der Maschine durch die Steuereinrichtung (1) in einen inaktiven Zustand versetzt und gleichzeitig die Geschwindigkeit gefährdungsrelevanter Maschinenteile auf einen jeweils vorbestimmten Maximalwert begrenzt.

## Beschreibung

Die vorliegende Erfindung betrifft ein Verfahren zum Betreiben einer Werkstückbearbeitungsmaschine, insbesondere einer Schneidmaschine, Stanzmaschine oder dergleichen, mit einem in einem Gefahrenbereich der Maschine arbeitenden Sensor, insbesondere einer Lichtschrankenanordnung, und einer Steuereinrichtung, wobei die Steuereinrichtung mit dem Sensor derart zusammenwirkt, dass in einem aktiven Zustand des Sensors das Eindringen eines Objektes in den Gefahrenbereich von dem Sensor erfasst und ein entsprechendes Objekterkennungssignal von dem Sensor an die Steuereinrichtung übermittelt wird, wobei die Steuereinrichtung nach Eingang des Objekterkennungssignals eine Sicherheitsmaßnahme, beispielsweise ein Abschalten der Maschine (Nothalt), auslöst. Die Erfindung betrifft ferner eine entsprechende Werkstückbearbeitungsmaschine mit dem zuvor beschriebenen Sensor und der zuvor beschriebenen Steuereinrichtung.

Aus der Druckschrift DE 10 2004 043 514 A1 ist bereits ein derartiges Verfahren zum Betreiben einer Maschine bekannt, bei der ein oberhalb einer Maschine angeordneter Sensor einen Überwachungsbereich beobachtet, welcher den Arbeitsbereich der Maschine, innerhalb dessen sich ein Roboterarm bewegt, sowie eine sich daran angrenzenden Bereich umfasst. Bei dem bekannten Verfahren wird innerhalb des Überwachungsbereichs ein Gefahrenbereich definiert, bei dessen Verletzung durch ein Objekt eine sicherheitsrelevante Funktion ausgelöst werden muss. Beispielsweise kann beim Eindringen einer Person in den Gefahrenbereich die Maschine abgeschaltet werden. Die Größe und Form des Gefahrenbereichs wird von einer Auswerteeinheit basierend auf den direkt von der Maschinensteuerung erhaltenen Daten, wie beispielsweise Position, Bewegungsgeschwindigkeit und Bewegungsrichtung des Roboterarms, festgelegt. Dadurch kann der Gefahrenbereich minimiert werden. Hierbei kann der Gefahrenbereich dynamisch, d.h. mit dem Roboterarm mitwandernd, oder auch statisch festgelegt werden. Eine solche Beobachtung und Definition eines Überwachungsbereichs ist recht aufwendig.

Bei Schneidmaschinen, Stanzmaschinen oder dergleichen Werkstückbearbeitungsmaschinen kann es in einzelnen Prozesszuständen, beispielsweise durch Funkenflug, Schlackespritzer und andere Emissionen, auch mehrfach zu einer ungewollten Durchführung der sicherheitsrelevanten Funktion kommen, so dass der Produktionsprozess erheblich gestört wird.

Die Druckschrift DE 20 2008 016 093 U1 beschreibt einen Überwachungssensor, der zur Überwachung eines Schutzfeldes einer Maschine vorgesehen ist, wobei dieser das wenigstens zweidimensionale Schutzfeld abtastet. Um dem obigen Problem zu begegnen, werden in dem bekannten System verschiedene Überwachungsfelder definiert, für die mittels einer Auswerteeinheit jeweils eine erlaubte Verweildauer eines Objekts einstellbar ist. Überschreitet die tatsächlich gemessene Zeitdauer des Verweilens eines Objekts die jeweils erlaubte Verweildauer für das zugehörige Überwachungsfeld, wird ein entsprechendes Feststellungssignal generiert. Partikel wie Späne oder spritzende Kühlflüssigkeit, welche die sicherheitsrelevante Funktion nicht auslösen sollen, sind nur sehr kurz, d.h. innerhalb der erlaubten Verweildauer, in einem Überwachungsfeld erfassbar. Ein entsprechenden Objektfeststellungssignals wird daher nicht generiert. Ein solches Vorgehen kann jedoch, insbesondere wenn die erlaubte Verweildauer in einem Überwachungsfeld länger ist, zu einer deutlichen Verringerung der Reaktionsgeschwindigkeit des Systems führen. Durch die Beobachtung der Verweildauer des eingedrungenen Objekts und das Tätigwerden erst dann, wenn die erlaubte Verweildauer überschritten ist, ändert sich natürlich auch die Reaktionszeit in Bezug auf das Eindringen von Objekten, beispielsweise Personen, welches das Auslösen der Sicherheitsmaßnahme erfordert. Hierdurch wird eine gefährliche Annäherung des Objektes an die Gefahrenstelle möglich.

Die Druckschrift DE 44 24 537 A1 spricht das gleiche Problem an. Das in dieser Druckschrift beschriebene Lichtgitter mit einer Reihe nebeneinander angeordneten Lichtsendern und Lichtempfängern tastet ein Schutzfeld zyklisch ab. Hierbei führen bestimmte, definierte Unterbrechungen des Schutzfeldes, die als ungefährlich eingestuft werden, beispielsweise durch Funken mit einer Geschwindigkeit oberhalb einer Mindestgeschwindigkeit, nicht zum Auslösen eines Alarm-oder Abschaltsignals. Auch dieses Vorgehen erfordert eine vergleichsweise komplizierte und aufwendige Vorrichtung sowie Signalverarbeitung.

Die Aufgabe der vorliegenden Erfindung besteht demnach darin, ein einfaches Verfahren zum Betreiben eine Werkstückbearbeitungsmaschine anzugeben, welches bei Störungen, wie Funkenflug oder Schlackespritzer, nicht zum Auslösen einer Sicherheitsmaßnahme führt. Die Aufgabe besteht ferner darin, eine entsprechende einfache und kostengünstig realisierbare Werkstückbearbeitungsmaschine zu schaffen.

Die obige Aufgabe wird gelöst durch ein Verfahren, bei dem der Sensor durch die Steuereinrichtung vor Beginn des vorbestimmten, kritischen Prozessschrittes der Maschine in den inaktiven Zustand versetzt und gleichzeitig die Geschwindigkeit gefährdungsrelevanter Maschinenteile jeweils auf einen vorbestimmten Maximalwert begrenzt wird.

Das obige erfindungsgemäße Verfahren beruht auf der Erkenntnis, dass das ungewollte Auslösen einer Sicherheitsmaßahme zeitlich auf die Dauer eines kritischen Prozessschrittes oder mehrerer kritischer Prozessschritte, d.h. auf wenige Sekunden des gesamten, durch die Maschine ausgeführten Prozesses begrenzt ist. In einem solchen kritischen Prozessschritt ist es sinnvoll, den Sensor zu deaktivieren, d.h. in einen inaktiven Zustand zu versetzen. In dem inaktiven Zustand erfasst der Sensor in den Gefahrenbereich eindringende Objekte nicht und generiert in diesem Zustand auch kein entsprechendes Objekterkennungssignal. Alternativ wird im inaktiven Zustand des Sensors ein von dem Sensor übermitteltes Objekterkennungssignal durch die Steuereinrichtung ignoriert. Im aktiven Zustand werden dagegen mittels des Sensors in den Gefahrenbereich eindringende Objekte erfasst, ein Objekterkennungssignal generiert und der Steuereinrichtung übermittelt, welche dieses auch berücksichtigt. Dies ist insbesondere zum Schutz des Maschinenbedieners vor den Gefahren der Maschine erforderlich.

Hierbei ist der Sensor vorzugsweise als Lichtschranke oder anderer optischer Sensor ausgebildet. In einem bevorzugten Ausführungsbeispiel ist der Sensor mit der Maschine mitfahrend, beispielsweise an einem Portal, angeordnet. Die Lichtschranke beinhaltet in bekannter Weise einen Lichtsender und einen Lichtempfänger, wobei ein Lichtstrahl, beispielsweise ein Laserlichtstrahl, von dem Lichtsender ausgesendet und mit dem Lichtempfänger empfangen wird. Beim Eindringen eines Objektes in den von der Lichtschranke umgebenen Gefahrenbereich wird der Lichtstrahl unterbrochen und der Lichtempfänger empfängt kein Signal. Hierdurch wird das Eindringen des Objekts detektiert. Zur Reduktion der Zahl der Lichtsender können auch Strahlteiler und Strahlspreizvorrichtungen eingesetzt werden.

Gleichzeitig mit der Deaktivierung des Sensors wird, um die Gefährdung von in diesem Zeitraum in den Gefahrenbereich eindringenden Personen oder anderen Objekten zu minimieren, die Geschwindigkeit gefährdungsrelevanter Maschinenteile auf einen jeweils vorbestimmten Maximalwert begrenzt.

Während des vorbestimmten, krischen Prozessschrittes ist daher die Schutzfunktion des Sensors, der beim Eindringen eines Objekts in den Gefahrenbereich eine Sicherheitsmaßnahme auslöst, nicht gegeben. Da jedoch die Bewegungsgeschwindigkeit der gefährdungsrelevanten Maschinenteile für die Dauer des kritischen Prozesses auf einen niedrige, sichere und ohne Schutzeinrichtung zugelassene Geschwindigkeit begrenzt wird, ist die Schutzfunktion in diesem Zeitraum auch nicht unbedingt erforderlich. Da es sich bei dem (den) kritischen Prozessschritt(en) jeweils nur um einen kurzen Zeitraum handelt, wird durch die Herabsetzung der Geschwindigkeit der gefährdungsrelevanten Maschinenteilen auch der Produktionsprozess nicht wesentlich verlängert, so dass keine negativen Auswirkungen auf die Produktivität des Prozesses zu erwarten sind.

Die angegebene Maßnahme ist eine sehr einfache, leicht zu realisierende Maßnahme, welche auch kostengünstig realisierbar ist und keine zusätzliche Hardware benötigt.

Um eine maximale Sicherheit zu gewährleisten, wird der Sensor in einem bevorzugten Ausführungsbeispiel nach Ende des vorbestimmten Prozessschrittes der Maschine wieder durch die Steuereinrichtung in den aktiven Zustand versetzt. Entsprechend wird in dem Ausführungsbeispiel zum gleichen Zeitpunkt auch die Geschwindigkeitsbeschränkung der gefährdungsrelevanten Maschinenteile aufgehoben.

Im Verlauf des Betriebs der Werkstückbearbeitungsmaschine kann der Fall eintreten, dass das Ende des kritischen Prozessschrittes durch die Steuereirichtung nicht oder zu spät erkannt wird. Für diesen Fall ist es von Vorteil, wenn das Rückversetzen des Sensors in den aktiven Zustand durch die Steuereinrichtung unabhängig von dem Eintreten und/oder dem Erfassen des Endes des vorbestimmten Prozessschrittes spätestens nach Ablauf eines vorgegebenen Zeitraums nach der Deaktivierung des Sensors erfolgt. Durch diese zeitliche Limitierung des inaktiven Zustands des Sensors wird gewährleistet, dass nach einer kurzen Zeit, beispielsweise nach 5 Sekunden, wieder die Sicherheit von Personen bzw. anderen Objekten gegeben ist.

Um eine unnötige Verlängerung der Produktionszeit der Werkstückbearbeitungsmaschine zu vermeiden, wird in einem Ausführungsbeispiel der vorliegenden Erfindung mit der Reaktivierung des Sensors gleichzeitig die Geschwindigkeitsbegrenzung der gefährdungsrelevanten Maschinenteile aufgehoben.

Auch wenn eine Begrenzung der Geschwindigkeit der gefährdungsrelevanten Maschinenteile im inaktiven Zustand des Sensors erfolgt, ist nicht auszuschließen, dass aus irgendeinem Grund einzelne Maschinenteile den jeweils vorgegebenen Maximalwert der Geschwindigkeit überschreiten. Dies könnte doch noch zu einer Gefährdung von Personen und anderen Objekten führen. Demnach wird in einem Ausführungsbeispiel der vorliegenden Erfindung die Geschwindigkeit dieser Maschinenteile während des inaktiven Zustands des Sensors überwacht und im Fall einer Überschreitung des jeweiligen Maximalwerts eine Sicherheitsmaßnahme ausgelöst. Eine solche Sicherheitsmaßnahme kann beispielsweise ein Stopp der Werkstückbearbeitungsmaschine (Nothalt) darstellen, wobei vorzugsweise alle potenziell gefahrbringenden Elemente der Maschine abgeschaltet werden, beispielsweise der Maschinenantrieb oder die Energiezufuhr für die Werkstückbearbeitung. Die beim Überschreiten der Geschwindigkeit verwendete Sicherheitsmaßnahme kann mit der Sicherheitsmaßnahme beim Eindringen eines Objektes übereinstimmen oder verschieden von dieser sein.

Die obige Aufgabe wird auch gelöst durch eine Werkstückbearbeitungsmaschine, bei der der Sensor vor Beginn eines vorbestimmten Prozessschrittes der Maschine durch die Steuereinrichtung in einen inaktiven Zustand versetzbar und gleichzeitig die Geschwindigkeit gefährdungsrelevanter Maschinenteile durch die Steuereinrichtung auf einen jeweils vorgegebenen Maximalwert begrenzbar ist. Die Vorteile einer solchen Werkstückbearbeitungsmaschine und die weiteren Ausgestaltungen entsprechen denen des oben dargestellten erfindungsgemäßen Verfahrens.

Hinsichtlich der Werkstückbearbeitungsmaschine ist es insbesondere von Vorteil, wenn die Steuereinrichtung zweiteilig ausgebildet ist und einen Funktionalsteuerteil und einen Sicherheitssteuerteil aufweist. Der Funktionalsteuerteil überwacht die Prozessschritte der Maschine und der Sicherheitssteuerteil den in dem Gefahrenbereich arbeitenden Sensor. Folglich ist dem Funktionalsteuerteil der Beginn des kritischen, vorbestimmten Prozessschrittes bekannt. Entsprechend übermittelt das Funktionalsteuerteil vor Beginn des vorbestimmten Prozessschrittes ein entsprechendes Deaktivierungssignal an den Sicherheitssteuerteil. Nach dem Eingang des Deaktivierungssignals erfolgt durch das Sicherheitssteuerteil die Deaktivierung des Sensors und die Begrenzung der gefährdungsrelevanten Maschinenteile hinsichtlich ihrer Geschwindigkeit.

Weitere Ziele, Merkmale, Vorteile und Anwendungsmöglichkeiten der vorliegenden Erfindung ergeben sich auch aus der nachfolgenden Beschreibung eines Ausführungsbeispiels der erfindungsgemäßen Werkstückbearbeitungsmaschine bzw. des erfindungsgemäßen Verfahrens zum Betreiben einer solchen anhand der Figuren. Dabei bilden alle beschrieben und/oder bildlich dargestellten Merkmale für sich oder in beliebiger Kombination den Gegenstand der vorliegenden Erfindung, auch unabhängig von ihrer Zusammenfassung in den einzelnen Ansprüchen oder deren Rückbezügen.

Es zeigen schematisch:
- Fig. 1: den Aufbau einer erfindungsgemäßen Werkstückbearbeitungsmaschine,
- Fig. 2: ein erstes Ablaufdiagramm des erfindungsgemäßen Verfahrens in einem kritischen Prozessschritt und
- Fig. 3: ein zweites Ablaufdiagramm des erfindungsgemäßen Verfahrens in einem weiteren kritischen Prozessschritt.

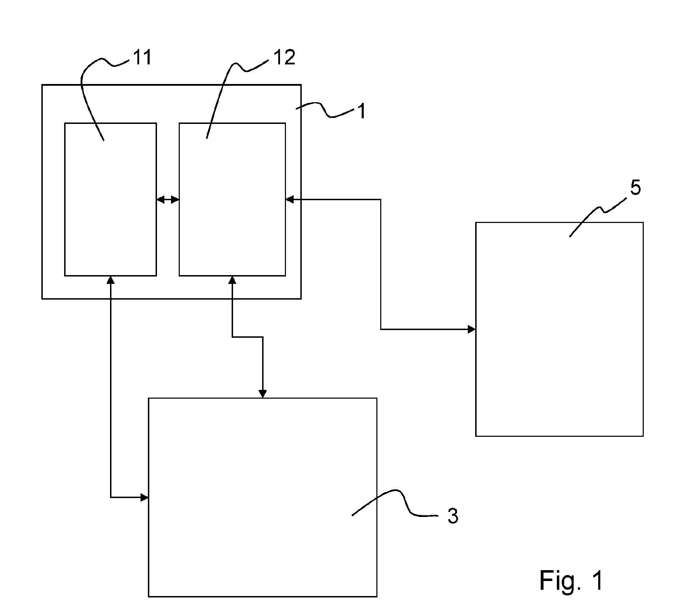

Im Folgenden wird die Erfindung in Bezug auf eine Schneidmaschine als Werkstückbearbeitungsmaschine beschrieben und in Fig. 1 dargestellt. Auf eine Schneidmaschine ist die vorliegende Erfindung jedoch nicht begrenzt, sondern kann auch für andere Werkstückbearbeitungsmaschinen wie Stanzmaschine, Sägemaschine oder dergl. verwendet werden.

Die Steuereinrichtung 1 der Schneidmaschine weist einen Funktionalsteuerteil 11 und einen Sicherheitssteuerteil 12 auf, welche über eine bidirektionale Verbindung Daten miteinander austauschen können. Grundsätzlich stellen alle in Fig. 1 gezeigten Doppelpfeile bidirektionale Verbindungen für den Datenaustausch dar.

Der Funktionalsteuerteil 11 hat die Aufgabe, Anwendungsprogramme auszuführen, d.h. den Schneidprozess zu steuern und somit beispielsweise die Bewegung des Schneidwerkzeugs entlang der Schneidgeometrie zu steuern. Hierfür ist der Funktionalsteuerteil 11 mit dem Maschinenantrieb 3 der Maschine, welcher beispielsweise das Schneidwerkzeug bewegt, verbunden. Der Funktionalsteuerteil 11 der Steuereinrichtung 1 hat insbesondere Informationen darüber, in welchem Prozesszustand sich die Schneidmaschine befindet.

Das Sicherheitssteuerteil 12 steuert und überwacht Sicherheitssensoren, beispielsweise den Not-Aus-Taster, die Bereichsendschalter, die Kollisionsschutzeinrichtungen sowie eine oder mehrere Lichtschranken 5, welche den Gefahrenbereich der Schneidmaschine überwachen. Jede Lichtschranke 5 ist an einer Grenze des zwei- oder dreidimensionalen Gefahrenbereichs der Schneidmaschine angeordnet, so dass durch die jeweilige Lichtschranke 5 das Eindringen eines Objektes, beispielsweise einer Person, eines Manipulationswerkzeuges oder anderer Maschinen- oder Roboterteile, aufgrund einer Unterbrechung des Lichtsignals erkannt wird.

Jede Lichtschranke 5 kann einen aktiven und einen inaktiven Zustand einnehmen. Im aktiven Zustand reagiert die Lichtschranke 5 auf eine Unterbrechung des Lichtstrahls und erkennt somit ein Eindringen eines Objektes in den Gefahrenbereich. Im inaktiven Zustand detektiert die Lichtschranke 5 ein solches Eindringen eines Objektes nicht und ist vorzugsweise abgeschaltet. Alternativ wird im inaktiven Zustand ein an den Sicherheitssteuerteil 12 übermitteltes Objekterkennungssignal im Sicherheitssteuerteil 12 ignoriert.

Dingt ein Objekt im aktiven Zustand der Lichtschranke in den Gefahrenbereich ein, so wird von der Lichtschranke 5 ein entsprechendes Objekterkennungssignal erzeugt und an das Sicherheitssteuerteil 12 übermittelt. Das Sicherheitssteuerteil 12 löst dann eine Sicherheitsmaßnahme aus. Beispielsweise kann die Sicherheitsmaßnahme ein Maschinenstopp sein, bei der das Sicherheitssteuerteil 12 ein entsprechendes Stoppsignal an den Maschinenantrieb 3 der Maschine sendet. Als weitere Sicherheitsmaßnahme kann alternativ oder zusätzlich die erforderliche Energie für die Werkstückbearbeitung, d.h. in diesem Fall für das Schneiden des Werkstücks, abgeschaltet werden. Das Sicherheitssteuerteil 12 hat die Aufgabe, dass das Sicherheitskonzept der Schneidmaschine auch bei einem beliebigen Ausfall des Funktionalsteuerteils 11 eingehalten wird. Hierfür besteht das Sicherheitssteuerteil aus Komponenten, die für Sicherheitsanwendungen zertifiziert und zugelassen sind.

Ein kritischer Prozessschritt, in dem Funkenflug und/oder Schlackespritzer die Lichtschranke stören können, ist das sogenannte Lochstechen, welches dem eigentlichen Schneiden des Werkstücks voran geht. Während des Lochstechens ist es erfindungsgemäß vorgesehen, dass die Lichtschranke 5 in den inaktiven Zustand versetzt und dass die Geschwindigkeit der gefährdungsrelevanten Maschinenteile, beispielsweise des Schneidwerkzeugs, begrenzt wird.

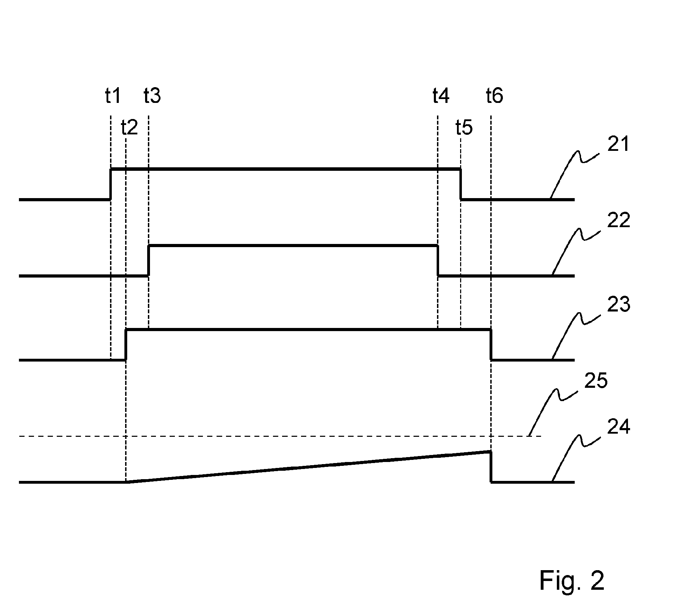

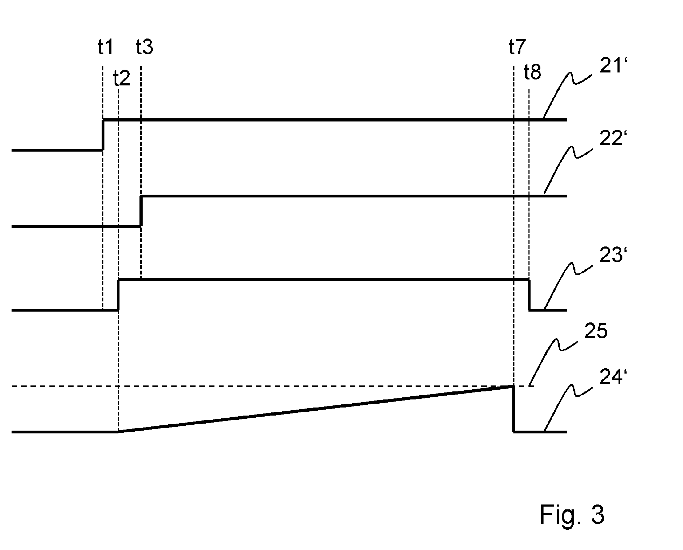

Das von der Schneidemaschine durchgeführte Verfahren wird im Folgenden anhand der in Fig. 2 und 3 dargestellten Ablaufdiagramme erläutert. In den Ablaufdiagrammen sind Signalverläufe als Funktion der Zeit aufgetragen.

Das mit dem Bezugszeichen 21 versehene Signal stellt die Anmeldung des kritischen Prozessschrittes "Lochstechen" seitens des Funktionalsteuerteils 11 dar. Unmittelbar vor dem Beginn dieses Prozessschrittes springt der Signalpegel zum Zeitpunkt t1 von Low auf High (bzw. von 0 auf 1). Das Signal wird dem Sicherheitssteuerteil 12 übermittelt, worauf dieses zum Zeitpunkt t2 die Lichtschranke 5 deaktiviert (siehe Signal 23). Ferner wird ab dem Zeitpunkt t2 der Maschinenantrieb 3 durch den Funktionalsteuerteil 11 derart gesteuert, dass die gefährdungsrelevanten Teile der Maschine, insbesondere das Schneidwerkzeug, nur mit einer jeweils vorgegebenen Maximalgeschwindigkeit bewegt werden, so dass Personen und Objekte auch bei abgeschalteter Lichtschranke 5 nicht gefährdet werden. Ferner wird zum Zeitpunkt t2 eine Geschwindigkeitsüberwachung, die in den Maschinenantrieb 3 integriert ist, aktiviert, welche die Geschwindigkeit der gefährdungsrelevanten Maschinenteile, beispielsweise des Schneidwerkzeugs, derart überwacht, dass die tatsächliche Geschwindigkeit den jeweiligen Maximalwert nicht überschreitet. Hierfür wird ein entsprechendes Signal an den Maschinenantrieb 3 übermittelt. Zum Zeitpunkt t3 kann dann das Lochstechen durch den Funktionalsteuerteil 11 mittels eines entsprechenden Signals an den Maschinenantrieb 3 tatsächlich gestartet werden (vgl. Signal 22).

Nach Ende des Lochstechens, das durch den Funktionalsteuerteil 11 anhand der Änderung des Signals 22 zum Zeitpunkt t4 erkannt wird, wird zum Zeitpunkt t5 auch das Anmeldungssignal 21 des kritischen Prozessschrittes entsprechend verändert. Ferner wird dem Sicherheitssteuerteil 12 der Prozesszustand übermittelt, so dass dieser zum Zeitpunkt t6 die Lichtschranke 5 wieder in den aktiven Zustand versetzt und die Geschwindigkeitsbegrenzung der gefährdungsrelevanten Maschinenteile durch den Maschinenantrieb 3 deaktiviert. Ferner wird zu diesem Zeitpunkt auch die Geschwindigkeitsüberwachung dieser Maschinenteile deaktiviert.

Um sicherzustellen, dass die Maschine sicher betrieben wird unabhängig davon, ob der Funktionalsteuerteil 11 das Ende des kritischen Prozessschrittes erkennt und ein entsprechendes Signal an das Sicherheitssteuerteil 12 sendet, wird bei Deaktivierung der Lichtschranke zum Zeitpunkt t2 eine Uhr gestartet, welche die seit der Deaktivierung der Lichtschranke vergangene Zeit misst. Diese Zeitmessung wird in Fig. 2 und 3 mit Hilfe des Signals 24 bzw. 24' gezeigt, bei dem die Signalhöhe ein Maß für die abgelaufene Zeit ab dem Zeitpunkt t2 der Deaktivierung der Lichtschranke 5 darstellt. Wenn die Signalhöhe einen bestimmten, vorgegebenen Pegel, welcher in Fig. 2 und 3 als Linie 25 eingezeichnet ist, erreicht, ist ein Zeitlimit erreicht, bei dem die Lichtschranke 5 unabhängig von der Beendigung des Lochstechens oder der Übermittlung entsprechender Signale wieder aktiviert wird. In dem in Fig. 2 dargestellten Verhalten der Schneidmaschine erreicht das Signal 24 die Linie 25 und damit das Zeitlimit nicht.

Falls im inaktiven Zustand der Lichtschranke 5 die Geschwindigkeitsüberwachung eine Überschreitung der vorgegebenen Maximalgeschwindigkeit der gefährdungsrelevanten Maschinenteile feststellt, wird eine Sicherheitsmaßnahme, beispielsweise ein Maschinenstopp durchgeführt. Dies wird durch das Sicherheitssteuerteil 12 dem Maschinenantrieb 3 der Maschine übermittelt.

Demgegenüber erreicht das Signal 24' der in Fig. 3 dargestellten Verlaufsvariante, welche in den Ereignissen zu den Zeitpunkten t1 bis t3 mit dem in Fig. 2 gezeigten Verlauf übereinstimmt, den Pegel 25 und somit das vorgegebene Zeitlimit zum Zeitpunkt t7. Anhand der Signale 21' und 22' ist erkennbar, dass bis dahin ein Ende des Lochstechens durch den Funktionalsteuerteil 11 noch nicht erkannt wurde. Aufgrund des Erreichens des Zeitlimits wird in diesem Fall dann zum Zeitpunkt t8 durch den Sicherheitssteuerteil 12 die Lichtschranke 5 wieder aktiviert sowie die Geschwindigkeitsüberwachung und -beschränkung der gefährdungsrelevanten Maschinenteile beendet.

Das erfindungsgemäße Verfahren bzw. die erfindungsgemäße Werkstückbearbeitungsmaschine erlauben es, mit einfachen Mitteln in einem kritischen Prozessschritt wie dem Lochstechen ein sicheres Arbeiten der Maschine zu gewährleisten. Obwohl sich die Lichtschranke 5 im kritischen Prozessschritt im inaktiven Zustand befindet, ist dieses Vorgehen sicher, da die Maschine in dieser Zeit mit einer sicheren Höchstgeschwindigkeit fährt.

Falls der Beginn des kritischen Prozessschrittes von dem Funktionalsteuerteil 11 nicht erkannt wird, erfolgt keine Deaktivierung der Lichtschranke 5, so dass auch dann ein sicheres Betreiben der Maschine möglich ist. In diesem Fall arbeitet die Lichtschranke 5 weiterhin und wirkt auch mit dem Sicherheitssteuerteil 12 zusammen. Dann kann die Lichtschranke allenfalls durch Funkenflug oder Schlackespritzer in unerwünschter Weise unterbrochen werden.

### Bezugszeichenliste

- 1: Steuereinrichtung
- 3: Maschinenantrieb
- 5: Lichtschranke
- 11: Funktionalsteuerteil
- 12: Sicherheitssteuerteil
- 21, 21': Signal, das die Anmeldung des kritischen Prozesses darstellt
- 22, 22': Signal, das die Aktivität des kritischen Prozesses veranschaulicht
- 23, 23': Signal, das veranschaulicht, ob sich die Lichtschranke im inaktiven Zustand befindet und die Geschwindigkeitsbegrenzung aktiviert ist
- 24, 24': Signal, das die Zeitüberwachung darstellt
- 25: Pegel zur Feststellung des Erreichens des Zeitlimits
- t1, t2, t3, t4, t5, t6, t7, t8: Zeitpunkt

## Patentansprüche

1. Verfahren zum Betreiben einer Werkstückbearbeitungsmaschine, insbesondere einer Schneidmaschine, Stanzmaschine oder dergl., mit einem in einem Gefahrenbereich der Maschine arbeitenden Sensor (5), insbesondere einer Lichtschrankenanordnung, und einer Steuereinrichtung (1), wobei die Steuereinrichtung mit dem Sensor (5) derart zusammenwirkt, dass in einem aktiven Zustand des Sensors (5) das Eindringen eines Objektes in den Gefahrenbereich von dem Sensor erfasst und ein entsprechendes Objekterkennungssignal von dem Sensor an die Steuereinrichtung (1) übermittelt wird, wobei die Steuereinrichtung (1) nach Eingang des Objekterkennungssignals eine Sicherheitsmaßnahme auslöst, **dadurch gekennzeichnet, dass** der Sensor (5) durch die Steuereinrichtung (1) vor Beginn eines vorbestimmten Prozessschrittes der Maschine in einen inaktiven Zustand versetzt und gleichzeitig die Geschwindigkeit gefährdungsrelevanter Maschinenteile auf einen jeweils vorbestimmten Maximalwert begrenzt wird.

2. Verfahren nach Anspruch 1, **dadurch gekennzeichnet, dass** der Sensor (5) nach Ende des vorbestimmten Prozessschrittes der Maschine wieder durch die Steuereinrichtung (1) in den aktiven Zustand versetzt wird.

3. Verfahren nach Anspruch 2, **dadurch gekennzeichnet, dass** das Rückversetzen des Sensors (5) durch die Steuereinrichtung (1) in den aktiven Zustand in jedem Fall spätestens nach Ablauf eines vorgegebenen Zeitraums nach seiner Deaktivierung erfolgt.

4. Verfahren nach einem der Ansprüche 2 und 3, **dadurch gekennzeichnet, dass** mit der Reaktivierung des Sensors (5) gleichzeitig die Geschwindigkeitsbegrenzung der gefährdungsrelevanten Maschinenteile aufgehoben wird.

5. Verfahren nach einem der vorhergehenden Ansprüche, **dadurch gekennzeichnet, dass** im inaktiven Zustand des Sensors (5) die Geschwindigkeit der gefährdungsrelevanten Maschinenteile überwacht wird und im Fall einer Überschreitung des jeweiligen Maximalwerts eine Sicherheitsmaßnahme ausgelöst wird.

6. Werkstückbearbeitungsmaschine, insbesondere Schneidmaschine, Stanzmaschine oder dergl., mit einem in einem Gefahrenbereich der Maschine arbeitenden Sensor (5), insbesondere einer Lichtschrankenanordnung, und einer Steuereinrichtung (1), wobei die Steuereinrichtung (1) mit dem Sensor (5) derart zusammenwirkt, dass in einem aktiven Zustand des Sensors (5) das Eindringen eines Objektes in den Gefahrenbereich von dem Sensor (5) erfassbar und ein entsprechendes Erkennungssignal von dem Sensor (5) an die Steuereinrichtung (1) übermittelbar ist, wobei die Steuereinrichtung (1) beim Eingang des Erkennungssignals eine Sicherheitsmaßnahme auslöst, **dadurch gekennzeichnet, dass** der Sensor (5) vor Beginn eines vorbestimmten Prozessschrittes der Maschine durch die Steuereinrichtung (1) in einen inaktiven Zustand versetzbar ist und gleichzeitig die Geschwindigkeit gefährdungsrelevanter Maschinenteile durch die Steuereinrichtung (1) auf einen jeweils vorgegebenen Maximalwert begrenzbar ist.

7. Werkstückbearbeitungsmaschine nach Anspruch 6, **dadurch gekennzeichnet, dass** der Sensor (5) nach Ende des vorbestimmten Prozessschrittes der Maschine wieder durch die Steuereinrichtung (1) in den aktiven Zustand versetzbar ist.

8. Werkstückbearbeitungsmaschine nach Anspruch 7, **dadurch gekennzeichnet, dass** die Steuereinrichtung (1) derart eingerichtet ist, dass das Rückversetzen des Sensors (5) durch die Steuereinrichtung (1) in den aktiven Zustand in jedem Fall spätestens nach Ablauf eines vorgegebenen Zeitraums nach seiner Deaktivierung erfolgt.

9. Werkstückbearbeitungsmaschine nach einem der Ansprüche 7 und 8, **dadurch gekennzeichnet, dass** die Steuereinrichtung (1) derart eingerichtet ist, dass gleichzeitig mit der Reaktivierung des Sensors (5) die Geschwindigkeitsbegrenzung der gefährdungsrelevanten Maschinenteile aufhebbar ist.

10. Werkstückbearbeitungsmaschine nach einem der Ansprüche 6 bis 9, **dadurch gekennzeichnet, dass** die Steuereinrichtung (1) derart eingerichtet ist, dass im inaktiven Zustand des Sensors (5) die Geschwindigkeit der gefährdungsrelevanten Maschinenteile überwachbar ist und im Fall einer Überschreitung des jeweiligen Maximalwerts die Sicherheitsmaßnahme auslösbar ist.

11. Werkstückbearbeitungsmaschine nach einem der Ansprüche 6 bis 10, **dadurch gekennzeichnet, dass** die Steuereinrichtung (1) einen Funktionalsteuerteil (11) und einen Sicherheitssteuerteil (12) aufweist, wobei der Funktionalsteuerteil (11) die Prozessschritte der Maschine und der Sicherheitssteuerteil (12) den in dem Gefahrenbereich arbeitenden Sensor überwacht, wobei durch das Funktionalsteuerteil (11) vor Beginn des vorbestimmten Prozessschrittes ein entsprechendes Deaktivierungssignal an den Sicherheitssteuerteil (12) übermittelbar ist, nach dessen Eingang durch das Sicherheitssteuerteil (12) die Deaktivierung des Sensors (5) und die Geschwindigkeitsbegrenzung der gefährdungsrelevanten Maschinenteile erfolgt.
